# EUROPÄISCHE PATENTSCHRIFT

(11) **EP 0 653 276 B1**
(45) Veröffentlichungstag und Bekanntmachung des Hinweises auf die Patenterteilung: **10.09.1997**
(21) Anmeldenummer: 94115872.7
(22) Anmeldetag: 07.10.1994
(51) Int. Cl.: B29B 7/64

(54) **Schwenkvorrichtung für einen Schaber**
Pivoting device for a scraper
Dispositif de pivotement pour un radeur

(30) Priorität: 27.10.1993 DE 4336708
(43) Veröffentlichungstag der Anmeldung: 17.05.1995
(73) Patentinhaber: Rieter-Werke Händle GmbH & Co. KG, 78467 Konstanz (DE)
(72) Erfinder: Riedle, Gebhard, D-78465 Konstanz (DE)
(74) Vertreter: Liesegang, Roland, Dr.-Ing.

(56) Entgegenhaltungen:
- GB-A- 140 483
- GB-A- 738 436
- US-A- 2 629 129
- PATENT ABSTRACTS OF JAPAN vol. 9, no. 70 (M-367)(1793) 30. März 1985 & JP-A-59 201 837 (YOKOHAMA GOMU)

## Beschreibung

Die Erfindung betrifft eine Vorrichtung nach dem Oberbegriff des Anspruchs 1, wie sie beispielsweise in der JP-A-59-201837 beschrieben ist.

Abstreif- bzw. Schabereinrichtungen an Walzwerken sind bekanntlich zur Gewährleistung eines gleichbleibenden und zufriedenstellenden Walzergebnisses erforderlich. Dabei sind in der Regel an einem Walzwerk (Walzenpaar) zwei Schaber vorhanden, die sich zweckmäßigerweise in Laufrichtung der Walzen unmittelbar hinter dem Walzenspalt befinden, wobei die Schaber häufig unterhalb von (horizontal angeordneten) Walzen angebracht sind, um zu ermöglichen, daß abgestreiftes Material zur weiteren Verarbeitung, Entsorgung o.ä. frei auf ein Materialabzugsband fallen kann. Die Anstellung der Schaber gegen die zu reinigenden Walzen wird dabei meist mechanisch oder pneumatisch vorgenommen.

Ein Auswechseln der dem Verschleiß unterliegenden Schaber ist bisher schwierig, zeitaufwending und nicht ungefährlich, da der Zugang zum Raum zwischen dem Walzwerk und dem Materialabzugsband sehr beengt ist und von dem betreffenden Arbeiter eine äußerst unergonomische Haltung verlangt. Es sind Schabereinrichtungen bekannt, die diese Schwierigkeit umgehen, indem die Schaber vom Maschinenniveau aus manuell entfernt und dann gewartet werden können. Diese Einrichtungen weisen jedoch den Nachteil auf, daß sie einen erheblichen Kraftaufwand zum Entfernen der relativ schweren Schaber erfordern.

Aufgabe der vorliegenden Erfindung ist es, unter Vermeidung der genannten und weiterer Nachteile eine Schabereinrichtung der genannten Art zu schaffen, bei der die zu wartenden bzw. auszuwechselnden Schaber schnell, sicher und ohne jegliche menschliche Kraftaufwendung aus der Maschine in eine gut zugängliche Wartungsstellung zu bringen sind, aus der sie nach Ausführung der Wartungsarbeiten wieder in die Betriebsstellung gebracht werden können.

Diese Aufgabe ist ist erfindungsgemäß durch Anspruch 1 gelöst.

Vorteilhafte Weiterbildungen der Erfindung sind in den Unteransprüchen beschrieben.

Die Erfindung wird nachfolgend beispielhaft anhand einer bevorzugten Ausführungsform unter Bezugnahme auf eine Zeichnung näher beschrieben, in der
- Fig. 1: eine Draufsicht auf die erfindungsgemäße Schwenkvorrichtung in Richtung der Schwenkachsen ist, und
- Fig. 2: eine Seitenansicht der Vorrichtung nach Fig. 1 ist.

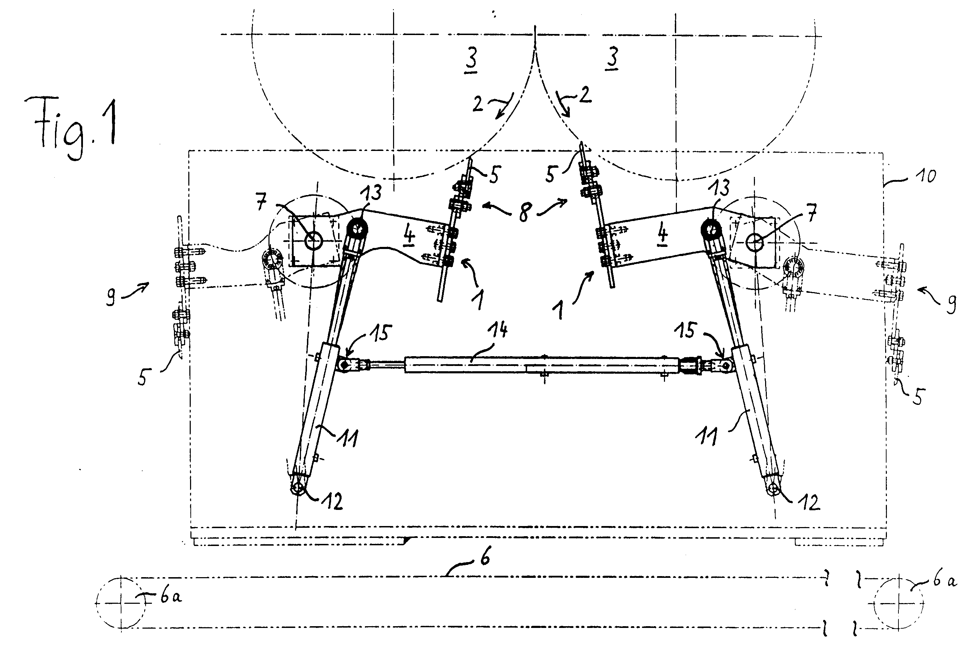

Wie aus Figur 1 hervorgeht, dienen die im ganzen mit 1 bezeichneten Schaber dazu, die in Richtung der Pfeile 2 umlaufenden Walzen 3 zu reinigen bzw. abzustreifen. Dazu sind an den Schaberarmen 4 Schaberwerkzeuge bzw. -klingen 5 gehalten, die an der zylindrischen Oberfläche der Walzen 3 anliegen. Die Schaberwerkzeuge 5 erstrecken sich (senkrecht zur Darstellungsebene der Figur 1) in der gewünschten Länge, d.h. in der Regel über die gesamte Länge der Walzen 3, wobei die Schaberarme 4 jeweils an den Endabschnitten der Schaberwerkzeuge 5 angeordnet sind, wodurch sich ein U-förmiger Aufbau der Schaber 1 ergibt. Abgeschabtes Material fällt im wesentlichen zwischen den Schabern 1 hindurch auf ein Materialabzugsband 6, welches unterhalb der Anordnung zwischen zwei Spannrollen 6a umläuft.

Wie aus Figur 1 weiter hervorgeht, sind die Schaber 1 um parallel zu den Rotationsachsen der Walzen 3 verlaufende Schwenkachsen 7 schwenkbar, wodurch sie aus der Betriebsstellung 8 in eine Wartungsstellung 9 zu schwenken sind, in der die Schaberwerkzeuge 5 leicht zugänglich sind. Die Achsen 7 bzw. die erforderlichen Lagerungen sind dabei ortsfest im Verhältnis zum Maschinenrahmen 10 der Schabervorrichtung.

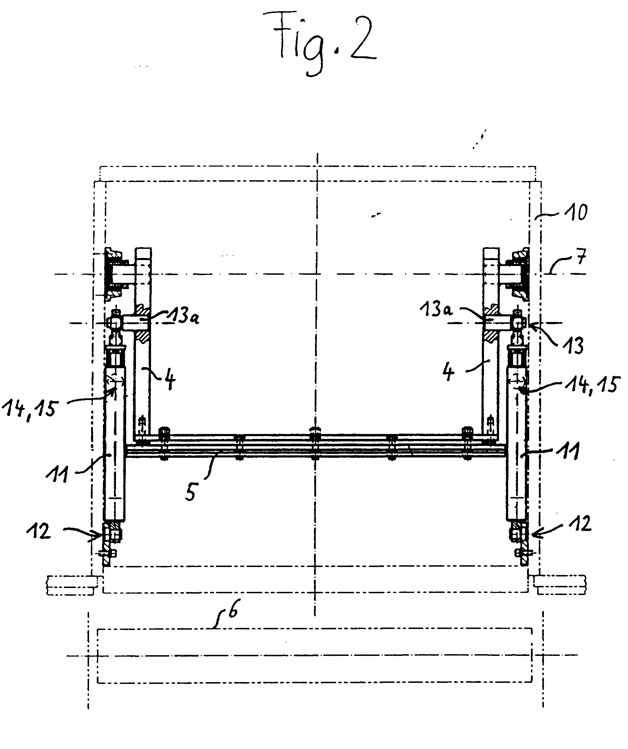

Zur Verdeutlichung der Lagerung der Schaber im Maschinenrahmen 10 sei auf Figur 2 verwiesen, die den U-förmigen Aufbau eines Schabers mit zwei Schaberarmen 4 und dem Schaberwerkzeug 5 in der Seitenansicht zeigt, wobei der Schaber um die ortsfeste Achse 7 schwenken kann.

Der Schwenkantrieb der Schaber besteht zunächst aus jeweils zwei Hydraulikzylindern 11, die jeweils zwischen einem im Bezug zum Maschinenrahmen 10 ortsfesten Abstützpunkt 12 und einer Anlenkung 13 auf die Schaberarme 4 wirken. Der Antrieb umfaßt weiter einen Hilfszylinder 14, der zwischen den beiden Schabern wirkt und mit jeweils einem Ende über die Anlenkung 15 an einen Hydraulikzylinder 11 angeschlossen ist, wobei auch hier insgesamt zwei Hilfszylinder 14 vorhanden sind - jeweils einer an einem Endabschnitt der Schaberanordnung bzw. neben zwei benachbarten Schaberarmen 4 - , wie auch aus Fig. 2 hervorgeht. In Figur 2 ist weiterhin ersichtlich, daß die Antriebselemente 11 und 14 außerhalb der U-förmigen Schaberandordnung 4, 5 angebracht sind, damit der Schaber um etwa 180° geschwenkt werden kann, ohne anzustoßen. Die Anlenkung 13 der Hydraulikzylinder 11 an den Schaberarmen 4 weist zu diesem Zweck jeweils einen Zapfen 13a auf.

Um die Schaber 1 aus der in Figur 1 ausgezogen dargestellten Arbeitsstellung 8 in die gestrichelt dargestellte Wartungsstellung 9 zu bringen, werden zunächst die Kolbenstangen der Hydraulikzylinder 11 eingefahren. Da, wie erläutert, die Schwenkachsen 7 sowie die Abstützpunkte 12 ortsfest sind, führen die Schaber 1 dadurch eine kreisförmige Schwenkbewegung um die Schwenkachsen 7 aus. Wenn der untere Totpunkt erreicht ist, d.h. wenn sich die Anlenkungen 13 in der Draufsicht nach Figur 1 in einer Linie mit den Abstützpunkten 12 und den Schwenkachsen 7 befinden, werden die Hilfszylinder 14 so betätigt, daß eine Druckkraft ausgeübt wird, und bewegen somit die Schaber über den Totpunkt hinweg weiter in Richtung auf die Wartungsposition 9. Sobald der Totpunkt überschritten ist, werden auch die Hydraulikzylinder 11 unter Druck gesetzt, wobei nun die Zylinder 11 und 14 gemeinsam wirken, um die Schaber vollständig in die Wartungsposition 9 zu drücken. In dieser Stellung oder bereits vorher kann der Hilfszylinder 14 drucklos gemacht werden.

Nach Ausführung der erforderlichen Wartungsarbeiten werden die Kolbenstangen der Hydraulikzylinder 11 zunächst eingefahren, bis sich die Schaber erneut in der Totpunktposition befinden. In dieser Stellung werden die Hilfszylinder 14 so betätigt, daß eine Zugkraft ausgeübt und der Totpunkt überwunden wird, wonach die Hydraulikzylinder 11 erneut unter Druck gesetzt werden, um die Schaber wieder in ihre Arbeitsposition 8 zu bringen. Auch in dieser Position können die Hilfszylinder 14 drucklos sein. Es sei bemerkt, daß das Gewicht der Schaber in der Regel zur Ausführung der jeweiligen Abwärtsbewegungen ausreicht, so daß die Hydraulikzylinder 11 im Gegensatz zum Hilfszylinder 14 nicht doppeltwirkend sein müssen.

Bei entsprechender Ansteuerung der einzelnden Hydraulikzylinder ist selbstverständlich auch ein Herausschwenken bzw. eine Wartung eines einzelnen Schabers möglich, indem zum Beispiel in Figur 1 die Hydraulikzylinder 11 auf der linken Seite unter Druck und somit in Arbeitsstellung verbleiben, während lediglich die Hydraulikzylinder 11 auf der rechten Seite gemeinsam mit dem Hilfszylinder 14 in der oben beschriebenen Weise betätigt werden, um den Schaber der rechten Seite warten zu können.

## Patentansprüche

1. Vorrichtung zum Bewegen zweier Schaber (1), von denen jeder einer von zwei Walzen (3, 3) eines Walzwerks, insbesondere für die Aufbereitung von keramischen Massen, zugeordnet ist, wobei jeder Schaber (1) mittels eines eigenen Schwenkantriebs (11, 14) aus einer die zugehörige Walze abstreifenden Betriebsstellung (8) um eine zur Rotationsachse der Walze (3) parallele, ortsfeste Schwenkachse (7) in eine vom Walzenspalt entfernte, gut zugängliche Wartungsstellung (9) schwenkbar ist, dadurch **gekennzeichnet,** daß jeder Schwenkantrieb (11, 14) zwei Antriebselemente, nämlich ein mit dem betreffenden Schaber (1) gelenkig verbundenes Schwenkantriebselement (11) und ein mit dem Schwenkantriebselement (11) gelenkig verbundenes Hilfsantriebselement (14) aufweist.

2. Vorrichtung nach Anspruch 1, **gekennzeichnet** durch eine Steuerung für die zwei Schwenkantriebe zum Schwenken der zwei Schaber (1) entweder unabhängig voneinander oder gleichzeitig und in gleicher Weise.

3. Vorrichtung nach Anspruch 1 oder 2, dadurch **gekennzeichnet**, daß die Wirkungslinien jedes Schwenkantriebselementes (11) und jedes Hilfsantriebselementes (14) paarweise im wesentlichen senkrecht zueinander und senkrecht zu den Schwenkachsen (7) verlaufen.

4. Vorrichtung nach einem der vorangehenden Ansprüche, dadurch **gekennzeichnet**, daß die Antriebselemente (11, 14) Hydraulik- oder Pneumatikzylinder sind.

5. Vorrichtung nach einem der vorangehenden Ansprüche, dadurch **gekennzeichnet**, daß sich eine Anlenkung (13) des Schwenkantriebs (11, 14) an dem zugehörigen Schaber (1) axial außerhalb der Längserstreckung des Schabers (1) befindet.

6. Vorrichtung nach einem der vorangehenden Ansprüche, dadurch **gekennzeichnet**, daß jeder Schaber (1) ein parallel zur Rotationsachse der Walzen (3) verlaufendes Schaberwerkzeug (5) aufweist, welches an seinen entgegengesetzten Enden jeweils durch einen auf der Schwenkachse (7) gelagerten Schaberarm (4) gehalten ist.

7. Vorrichtung nach einem der vorangehenden Ansprüche, dadurch **gekennzeichnet**, daß in axialer Richtung beidseitig jedes Schabers (1) miteinander gekoppelte Antriebselemente (11, 14) vorhanden sind.

8. Vorrichtung nach einem der vorangehenden Ansprüche, dadurch **gekennzeichnet**, daß das Hilfsantriebselement (14) an einem Punkt des Schwenkantriebselements (11) angelenkt ist, der zwischen der Anlenkung (13) und einem ortsfesten Abstützpunkt (12) des Schwenkantriebelements (11) liegt.

9. Vorrichtung nach einem der vorangehenden Ansprüche 1 bis 7, dadurch **gekennzeichnet**, daß die Schwenkantriebselemente (11) symmetrisch zur Symmetrieebene des Walzenpaars (3, 3) angeordnet sind.

10. Vorrichtung nach einem der vorangehenden Ansprüche, dadurch **gekennzeichnet**, daß für beide Schaber (1) ein gemeinsames Hilfsantriebselement (14) vorgesehen ist, welches mit seinen entgegengesetzten Enden mit den beiden Schwenkantriebselementen (11) verbunden ist.

## Claims

1. Apparatus for moving two scrapers (1), each of which is associated with one of two rolls (3, 3) of a roll jaw crusher, more particularly for preparing ceramic materials, each scraper (11) being pivotable, by means of its own pivoting drive (11, 14), out of an operating position (8) in which it scrapes the associated roll, about a fixed pivot axis (7) parallel to the axis of rotation of the roll (3), into a readily accessible standby position (9) remote from the roll gap, characterised in that each pivoting drive (11, 14) comprises two drive elements, namely one pivoting drive element (11) pivotally connected to the associated scraper (1), and an auxiliary drive element (14) pivotally connected to the pivoting drive element (11).

2. Apparatus according to claim 1, characterised by a control for the two pivoting drives for pivoting the two scrapers (1) either independently of one another or simultaneously and in the same way.

3. Apparatus according to claim 1 or 2, characterised in that the lines of action of each pivoting drive element (11) and of each auxiliary drive element (14) extend in pairs substantially perpendicularly to one another and perpendicularly to the pivot axes (7).

4. Apparatus according to any one of the preceding claims, characterised in that the drive elements (11, 14) are hydraulic or pneumatic cylinders.

5. Apparatus according to any one of the preceding claims, characterised in that an articulation (13) of the pivoting drive (11, 14) on the associated scraper (1) is situated axially outside the length of the scraper (1).

6. Apparatus according to any one of the preceding claims, characterised in that each scraper (1) comprises a scraper tool (5) extending parallel to the axis of rotation of the rolls (3), said scraper tool being held at each of its opposite ends by a scraper arm (4) mounted on the pivot (7).

7. Apparatus according to any one of the preceding claims, characterised in that drive elements (11, 14) coupled to one another are provided axially on either side of each scraper (1).

8. Apparatus according to any one of the preceding claims, characterised in that the auxiliary drive element (14) is articulated on a point of the pivoting drive element (11) situated between the articulation (13) and a stationary supporting point (12) of the pivoting drive element (11).

9. Apparatus according to any one of the preceding claims 1 to 7, characterised in that the pivoting drive elements (11) are disposed symmetrically to the plane of symmetry of the pair of rolls (3, 3).

10. Apparatus according to any one of the preceding claims, characterised in that a common auxiliary drive element (14) is provided for both scrapers (1) and is connected at its opposite ends to the two pivoting drive elements (11).

## Revendications

1. Dispositif de pivotement de deux racloirs (1), dont chacun est associé à l'un des deux cylindres de laminage (3, 3) d'un laminoir, en particulier pour le traitement des pâtes céramiques, dans lequel chaque racloir (1) peut pivoter à l'aide de son propre dispositif de manoeuvre du pivotement (11, 14) d'une position de travail (8), destinée au grattage du cylindre correspondant, autour d'un axe de pivotement fixe (7), parallèle à l'axe de rotation des cylindres de laminage (3), afin d'être amené vers une position de maintenance (9) aisément accessible et éloignée de l'espacement entre les deux cylindres de laminage, caractérisé en ce que chaque dispositif de manoeuvre du pivotement (11, 14) est muni de deux éléments de manoeuvre, à savoir un élément de manoeuvre du pivotement (11) relié de manière articulée au racloir (1) correspondant et un élément de manoeuvre auxiliaire (14) relié de manière articulée à l'élément de manoeuvre du pivotement (11).

2. Dispositif selon la revendication 1, caractérisé par une commande des deux dispositifs de manoeuvre du pivotement pour faire pivoter les deux racloirs (1), soit indépendamment l'un de l'autre, soit les deux en même temps et de la même manière.

3. Dispositif selon la revendication 1 ou 2, caractérisé en ce que les lignes d'action de chaque élément de manoeuvre du pivotement (11) et de chaque élément de manoeuvre auxiliaire (14) s'étendent deux à deux sensiblement perpendiculaires l'une à l'autre et perpendiculaires aux axes de pivotement (7).

4. Dispositif selon l'une quelconque des revendications précédentes, caractérisé en ce que les éléments de manoeuvre (11, 14) sont des vérins hydrauliques ou pneumatiques.

5. Dispositif selon l'une quelconque des revendications précédentes, caractérisé en ce qu'un élément articulé (13) de l'élément de manoeuvre (11, 14) est disposé contre le racloir correspondant (1) dans le sens axial en dehors du prolongement longitudinal du racloir (1).

6. Dispositif selon l'une quelconque des revendications précédentes, caractérisé en ce que chaque racloir (1) est muni d'un outil de grattage (5) qui est parallèle à l'axe de rotation des cylindres de laminage (3) et dont l'extrémité opposée est maintenue par un bras du racloir (4) monté sur l'axe de pivotement (7).

7. Dispositif selon l'une quelconque des revendications précédentes, caractérisé en ce que, dans le sens axial, de part et d'autre de chaque racloir (1), il est prévu de monter des éléments de manoeuvre (11, 14) couplés.

8. Dispositif selon l'une quelconque des revendications précédentes, caractérisé en ce que l'élément de manoeuvre auxiliaire (14) est articulé en un point de l'élément de manoeuvre du pivotement (11) qui est situé entre l'élément articulé (13) et un élément de support (12), monté de manière fixe, de l'élément de manoeuvre du pivotement (11).

9. Dispositif selon l'une quelconque des revendications 1 à 7, caractérisé en ce que les éléments de manoeuvre du pivotement (11) sont disposés symétriquement par rapport au plan de symétrie des deux cylindres de laminage (3, 3).

10. Dispositif selon l'une quelconque des revendications précédentes, caractérisé en ce qu'il est prévu de monter un élément de manoeuvre auxiliaire (14) commun aux deux racloirs (1), dont les extrémités opposées sont reliées aux deux éléments de manoeuvre du pivotement (11).
